# EUROPÄISCHE PATENTSCHRIFT

(11) **EP 2 427 252 B1**
(45) Veröffentlichungstag und Bekanntmachung des Hinweises auf die Patenterteilung: **22.04.2015**
(21) Anmeldenummer: 10718877.3
(22) Anmeldetag: 23.04.2010
(51) Int. Cl.: B01D 25/28

(54) **MEMBRANTRÄGER FÜR EINE FILTERPRESSE**
MEMBRANE CARRIER FOR A FILTER PRESS
PORTE-MEMBRANE POUR FILTRE-PRESSE

(30) Priorität: 07.05.2009 DE 102009020317
(43) Veröffentlichungstag der Anmeldung: 14.03.2012
(73) Patentinhaber: Klinkau GmbH + Co. KG, 87616 Marktoberdorf-Leuterschach (DE)
(72) Erfinder: ZELLER, Johann, 87647 Oberthingau (DE)
(74) Vertreter: Appelt, Christian W.
(86) Internationale Anmeldenummer: PCT/EP2010/002519
(87) Internationale Veröffentlichungsnummer: WO 2010/127776

(56) Entgegenhaltungen:
- DE-A1- 4 119 166
- DE-U1- 8 419 759
- GB-A- 2 120 570

## Beschreibung

Die Erfindung betrifft einen Membranträger und eine Membran für eine Filterpresse, wobei die Membran lösbar mit dem Membranträger verbunden werden kann. Die Membran umfasst mindestens einen in der Regel umlaufenden Dichtungswulst, der in eine zugehörige Nut des Membranträgers eingesetzt werden kann.

Filterpressensysteme, in denen solche Membranträger und Membranen eingesetzt werden, sind grundsätzlich bekannt. In der Regel werden mehrere Bauteile in einer Filterpresse zusammengespannt, neben dem Membranträger und den Membranen werden gegebenenfalls auch sogenannte Kammerplatten verwendet, so dass zwischen einzelnen Bauteilen ein mit Druck beaufschlagbarer Kammerbereich bzw. ein Filterkammerbereich entsteht.

Über einen Einlauf- und/oder Auslaufbereich wird typischerweise eine Suspension in die Filterkammer gedrückt. Die Suspension wird üblicherweise durch ein auf der Membran aufliegendes Filtertuch gefiltert, wobei die Feststoffe durch das Filtertuch in der Filterkammer zurückgehalten werden. Es gibt jedoch auch Systeme, bei denen kein getrenntes Filtertuch vorgesehen ist. Das von den Festkörpern befreite Filtrat wird danach aus dem System herausgeleitet. Die Membranen können mit einem Druckmittel beaufschlagt werden, so dass sie sich von einem Randbereich der Filterkammer in die Filterkammer und aufeinander zu erstrecken, so dass die während des Filtervorgangs herausgefilterten Festkörper zusammengepresst und dabei verdichtet werden, so dass ein sogenannter Filterkuchen entsteht.

Es ist erforderlich, dass die einzelnen Bauteile bei einem Zusammenbau in einem Filterpressensystem gegeneinander abgedichtet werden.

Aus der DE 44 19 865 C1 ist beispielsweise ein Filterpressen-System bekannt, bei dem Filterplatten vorgesehen sind, in die eine Membran eingesetzt werden kann. Zur Abdichtung zweier Bauteile, hier einer Filterplatte einerseits und einer Membran andererseits, sind Dichtungen vorgesehen, die in einer Aufnahmenut aufgenommen sind, wobei die Aufnahmenut entweder in der Membran oder aber in der Filterplatte vorgesehen ist.

Die GB 2 120 570 A offenbart eine Filterplatte für eine Filterpresse, bei der mehrere randseitig zusammengespannte Filterplatten zwischen sich Filterkammern bilden. Die Filterplatte trägt eine vorbewegbare Presswand, die in die Filterkammer vorbewegbar ist und die kammerseitig an ihrer Oberfläche profiliert und mit einem Filtertuch belegt ist.

Die DE 84 19 759.5 U1 offenbart eine Membranfilterplatte, bestehend aus einem plattenförmigen Grundkörper und aus einer Membran aus einem gummielastischen Werkstoff mit verdicktem Rand mit einer umlaufenden Rippe, die in eine umlaufende Nut im Grundkörper eingreift.

Die DE 41 19 166 A1 offenbart ein Filterelement mit mehreren Filterplatten, die aus einer Stützwand mit einem umlaufenden Plattenrahmen bestehen und eine Filterkammer bilden. Die Filterplatten tragen eine Gummi-Membran, die in die Filterkammer durch ein Druckmittel vorbewegbar ist.

Basierend auf dem bekannten Stand der Technik ist es eine Aufgabe der vorliegenden Erfindung, ein Dichtungssystem, insbesondere die Abdichtung zwischen einem Membranträgerelement und einer Membran, weiter zu verbessern.

Diese Aufgabe wird durch einen Membranträger mit Membran für eine Filterpresse gemäß Anspruch 1 gelöst. Die Ansprüche 1 bis 8 betreffen besonders vorteilhafte Ausführungsformen des Membranträgers mit Membran gemäß Anspruch 1.

Erfindungsgemäß sind Membranträger und Membran so ausgebildet, dass die Membran lösbar mit dem Membranträger verbunden werden kann. Die Membran umfasst mindestens einen Dichtungswulst, wobei es sich bei vielen Ausführungsformen um einen im Wesentlichen umlaufenden Randwulst handelt. Allerdings kann der Dichtungswulst in verschiedenen Bereichen, also nicht nur in einem Randbereich, vorgesehen sein, beispielsweise im Bereich von sogenannten Stütznocken oder im Bereich eines Trübezulaufs. Es ist daher möglich, dass eine Membran mehrere voneinander getrennte Dichtungswulste aufweist.

Die mindestens eine Dichtungswulst kann in eine zugehörige Nut eines Membranträgers eingesetzt werden.

Dichtungswulst und zugehörige Nut erstrecken sich daher über eine gewisse Längsausdehnung und sind in der Regel umlaufend, d.h., in sich geschlossen, ohne einen festgelegten Anfang oder ein Ende. Die Form hängt dabei sehr von den Formen der Membran bzw. des Membranträgers ab, die wiederum typischerweise im Wesentlichen rechteckig ausgebildet sind.

Typischerweise und bevorzugt ist die Form sowohl der Dichtungswulst als auch der zugehörigen Nut über die Längserstreckung im Wesentlichen unverändert, das heißt, die Querschnittsform der Dichtungswulst bzw. der Nut bleibt über deren Längserstreckung über die gesamte Membran bzw. über den Membranträger im Wesentlichen unverändert.

Erfindungsgemäß weist die Dichtungswulst, in der oben beschriebenen Querschnittsrichtung, zwei Stege auf, die durch einen Zwischenraum voneinander getrennt sind. Erfindungsgemäß weist ferner die Nut des Membranträgers in ihrem Querschnitt ebenfalls einen Steg auf, der sich von einem Nutboden aus so erstreckt, dass er sich bei einer in den Membranträger eingesetzten Membran zumindest teilweise in den Zwischenraum zwischen den beiden oben genannten Stegen der Dichtungswulst erstreckt.

Die Nut des Membranträgers weist daher einen Nutboden auf, von dem sich, bevorzugt im Wesentlichen im 90 Grad Winkel, ein Steg in den Bereich der Nut erstreckt, wobei auf beiden Seiten des Steges noch offene Bereiche der Nut verbleiben oder Zwischenräume vorgesehen sind. Die Seitenwände der sich vom Nutboden erstreckenden Nut sind daher so angeordnet, dass sie zu den Innenwänden der Nut einen bestimmten Abstand aufweisen, wobei der Steg bevorzugt mittig angeordnet ist, so dass der seitliche Abstand zwischen Steg und Nutwand auf beiden Seiten im Wesentlichen gleich ist.

Der erfindungsgemäße Membranträger und die erfindungsgemäße Membran stellen damit ein Dichtungssystem zur Verfügung, das ohne zusätzliche Dichtungselemente, wie beispielsweise eine O-Ring Dichtung, die gegebenenfalls zwischen Membranträger und Membran eingesetzt werden müssten, auskommt.

Ein großer Vorteil des erfindungsgemäßen Membranträgers und der erfindungsgemäßen Membran ist insbesondere, dass ein doppelt dichtendes System zur Verfügung steht, das sehr zuverlässig ein Nachpressmedium und eine Waschflüssigkeit voneinander trennt, was bei den Systemen des Standes der Technik nicht oder nur in einem sehr unzureichenden Ausmaß möglich ist.

Ein Filterpressensystem, bei dem ein Membranträger und/oder eine Membran gemäß der Erfindung eingesetzt werden, durchläuft während des standardüblichen Gebrauchs mehrere Phasen, wobei je nach Vorgang unterschiedliche Druckverhältnisse vorliegen.

Beim Filtrieren oder beim Nachpressen herrscht typischerweise im Innenbereich, also im Bereich einer Filterkammer oder eines Kammervolumens, ein höherer Druck, während bei einem Waschvorgang im Außenbereich in höherer Druck vorliegt, so dass die Dichtung zwischen Membranträger und Membran je nach Betriebszustand von der einen oder von der anderen Seite mit einem höheren Druck belastet wird.

Befindet sich beispielsweise das System in einer Nachpressphase, entsteht zwischen Membran und Membranträger ein hoher Nachpressdruck, so dass das fluide Medium, das den Nachpressdruck erzeugt, zumindest teilweise zwischen Membran und Membranträger in Richtung auf die Dichtungswulst gedrückt wird.

Dies führt dazu, dass der innere, der Kammer bzw. dem Nachpressdruck zugewandte Steg des Dichtungswulstes der Membran teilweise dem Nachpressdruck nachgibt und in Richtung auf den vom Nutboden herausragenden Steg des Membranträgers gedrückt wird. Eine abschließende und vollständige Dichtung entsteht daher zwischen der Außenseite des vom Nutboden herausragenden Steges des Membranträgers und der Innenseite des ersten, inneren oder dem Kammerbereich zugewandten Stegs der Membran, so dass das fluide Medium aus dem Kammerbereich maximal bis zu diesem Bereich vordringen kann, daher in jedem Fall in der dem Kammerbereich zugewandten Bereich der Nut des Membranträgers, also auf der inneren Seite des vom Nutboden herausragenden Steges verbleibt.

Beim Waschvorgang tritt von der anderen, äußeren Seite, also vom Dichtrand, ein erhöhter Druck auf. Ein in Waschkanälen vorhandenes, fluides Medium wird daher, von der anderen Seite, zwischen Membran und Membranträger gedrückt. Bei diesem Vorgang wird der äußere bzw. dem Waschkanal zugewandte Steg der Membran nach innen, auf den Steg im Nutboden des Membranträgers zugedrückt, wobei auch hier eine abschließende und vollständige Abdichtung zwischen Innenseite des äußeren Steges des Dichtungswulstes der Membran und der Außenseite des sich vom Nutboden erstreckenden Stegs in der Nut des Membranträgers entsteht, so dass das in den Waschkanälen befindliche fluide Medium maximal bis in den äußeren Bereich des Nutbodens des Membranträgers erstreckt.

Auch bei wiederholt abwechselnden Betriebszuständen wird daher durch den erfindungsgemäßen Membranträger und die erfindungsgemäße Membran sichergestellt, dass das den Nachpressdruck erzeugende fluide Medium und das Waschmedium niemals, auch nicht im Bereich der Dichtung, in Kontakt miteinander kommen bzw. vermischt werden. Es wird daher erstmals in solchen Filterpressen ein zuverlässiges, doppeldichtendes oder redundantes Dichtungssystem ermöglicht, das insbesondere äußere Verschmutzungen zuverlässig vermeidet.

Ein weiterer Vorteil der vorliegenden Erfindung ist es, dass die Membrane auch sicher an dem Membranträger gehalten wird, wenn die Filterkammern geöffnet werden.

Bei einer besonders bevorzugten Ausführungsform sind die Stege der Membran, erneut in Querschnittsrichtung gesehen, zumindest teilweise konisch zulaufend ausgebildet. Dies hat den Vorteil, dass die Membran einfacher in den Membranträger eingesetzt werden kann. Ferner wird durch eine teilweise konisch zulaufende Ausbildung der einzelnen Stege auch die Bewegung des jeweiligen Stegs der Membran in Richtung auf den von dem Nutboden herausragenden Steg des Membranträgers unterstützt, was den oben beschriebenen Dichtungsvorgang vorteilhaft unterstützt.

Bevorzugt weist der Dichtungswulst der Membran im unbelasteten Zustand eine maximale Breite B₁ auf, die etwas größer ist als eine Breite B₃ der zugehörigen Nut, oder sogar etwas größer ist als die maximale Breite B₂ der zugehörigen Nut. Hierdurch wird eine sichere Befestigung des Dichtungswulstes und damit der Membran in dem Membranträger sichergestellt, ferner wird die Dichtungswirkung erhöht und verbessert. Bevorzugt ist die Breite B₁ um ca. 5% bis 30%, insbesondere um ca. 10% bis 20% größer als die Breite B₃, oder um ca. 2% bis 15%, insbesondere ca. 2% bis 10% größer als die Breite B₂.

Der Steg im Nutbogen des Membranträgers ist bei einer bevorzugten Ausführungsform im Querschnitt im Wesentlichen rechteckig ausgebildet, wobei er weiter bevorzugt in dem dem Nutboden abgewandten Bereich konisch zulaufend ausgebildet ist. Dies unterstützt ein zuverlässiges Einsetzen der Membran in den Membranträger, ferner unterstützt dies die oben beschriebene doppelt dichtende Funktion der erfindungsgemäßen Vorrichtung.

Bei einer Ausführungsform ist die Länge des Stegs im Nutboden kürzer als die Höhe des Zwischenraums zwischen den Stegen des Dichtungswulstes, wobei die Längenunterschiede bei einer bevorzugten Ausführungsform zwischen 2% und 30%, insbesondere bevorzugt zwischen 5% und 20% und insbesondere zwischen 5% und 10% liegen.

Bevorzugt sind Membran und Membranträger so ausgebildet, dass in einem eingesetzten Zustand der Membran ein Abstand oder ein Zwischenraum zwischen dem dem Nutboden abgewandten Ende des Stegs des Membranträgers und dem Abschluss des Zwischenraums zwischen den beiden Stegen des Dichtungswulstes der Membran verbleibt. Auch dies unterstützt auf sehr vorteilhafte Weise das oben beschriebene Doppeldichtungssytem und den Einsatz der Membran in den Membranträger. Bevorzugt erstreckt sich dieser Zwischenraum über eine Länge von ca. 0,5 bis 3 mm, oder ca. 1% bis 30%, besonders bevorzugt 1% bis 20% und insbesondere bevorzugt von 1% bis 15% der Höhe des Steges des Membranträgers, gemessen vom Nutboden des Membranträgers.

Bei einer bevorzugten Ausführungsform weisen die Stege der Dichtungswulst oder ein anderer Teil der Dichtungswulst, beispielsweise in einem Bereich, in dem die Stege bereits zusammengelaufen sind, also im Wesentlichen oberhalb der Stege (also in einem Bereich, in dem die Stege mit dem verbleibenden Bereich der Membran verbunden sind), zumindest an einer der dem Zwischenraum abgewandten Seiten oder Außenseiten mindestens eine Auswölbung auf, der oder die bevorzugt die maximale Breite B₁ des Dichtungswulstes bestimmen bzw. in deren Bereich die maximale Breite B₁ des Dichtungswulstes liegt. Bevorzugt sind zwei Auswölbungen, auf jeder Außenseite eine, vorgesehen.

Eine oder mehrere Auswölbungen sind bei einer besonders bevorzugten Ausführungsform zumindest teilweise kreissegmentförmig ausgebildet, wobei der Radius der kreissegmentförmigen Auswölbung bevorzugt in einem Bereich von 50% bis 150% der maximalen Dicke eines Steges des Dichtungswulstes, besonders bevorzugt zwischen 60% und 140%, insbesondere 70% bis 130% und bei einer besonders bevorzugten Ausführungsform zwischen 90% und 100% der Dicke eines Steges des Dichtungswulstes liegt.

Bei einer anderen bevorzugten Ausführungsform sind die eine oder mehreren Auswölbungen trapezsegmentförmig ausgebildet.

Bei einer bevorzugten Ausführungsform ist der Dichtungswulst der Membran zumindest teilweise aus einem anderen Material als die Membran selbst hergestellt, wobei bevorzugt zumindest beide Stege im Wesentlichen vollständig aus einem anderen Material hergestellt sind als die Membran selbst.

Bei einer besonders bevorzugten Ausführungsform ist das Material der Membran typischerweise härter als das davon abweichende Material des Dichtungswulstes bzw. der Stege des Dichtungswulstes. Hierdurch wird sichergestellt, dass sowohl die Membran einerseits als auch der Dichtungswulst andererseits besonders vorteilhaft auf ihre jeweilige Aufgabe angepasst werden können. Bevorzugte Werte für ein Elastizitätsmodul des für den Dichtungswulst bzw. die Stege verwendeten Materials liegen zwischen 300 und 3200 N/mm².

Als Membran wird bevorzugt eine thermoplastische Elastomer-Membran (TPE-Membran) eingesetzt, wobei die Härten dieser Membranen je nach Anwendungszweck gewählt werden können und bevorzugt zwischen 50 A bis 75 D Shore liegen.

Auch kann FPM (Viton®) eingesetzt werden, wobei sich dieser Werkstoff insbesondere bei Filtrationsanwendungen mit Kohlenwasserstoffen eignet.

Weitere bevorzugte Werkstoffe für die Komponenten, insbesondere den Membranträger, sind insbesondere Thermoplaste PP, Nylon oder PVDF, auch der Werkstoff Aluminium ist gegebenenfalls möglich.

Als Werkstoff für den von der Membran abweichenden Werkstoff für die Stege bzw. den Dichtungswulst kommen insbesondere in Frage:
- thermoplastische Elastomere auf Olefinbasis
- vernetzte thermoplastische Elastomere auf Olefinbasis
- thermoplastische Elastomere auf Urethanbasis
- thermoplastische Copolyester
- Styrolblockcopolymere
- thermoplastische Copolyamide

Als Werkstoffe für die Membran eignen sich insbesondere Thermoplaste, die mit den oben genannten Werkstoffen verschweißt oder fugenlos verklebt werden können.

Diese und weitere Merkmale und Vorteile der Erfindung werden anhand der nachfolgenden schematischen Abbildungen im Detail erläutert. Es zeigen:
Fig. 1 eine Teil-Querschnittsansicht einer Ausführungsform einer erfindungsgemäßen Membran und eines erfindungsgemäßen Membranträgers, wobei zusätzlich eine Kammerfilterplatte dargestellt ist;
Fig. 2 eine Teil-Querschnittsansicht einer Ausführungsform einer erfindungsgemäßen Membran;
Fig. 3 eine Teil-Querschnittsansicht einer weiteren Ausführungsform einer erfindungsgemäßen Membran;
Fig. 4 eine Teil-Querschnittsansicht einer Ausführungsform eines erfindungsgemäßen Membranträgers; und
Fig. 5 eine Teil-Querschnittsansicht einer Ausführungsform einer erfindungsgemäßen Membran und eines erfindungsgemäßen Membranträgers.

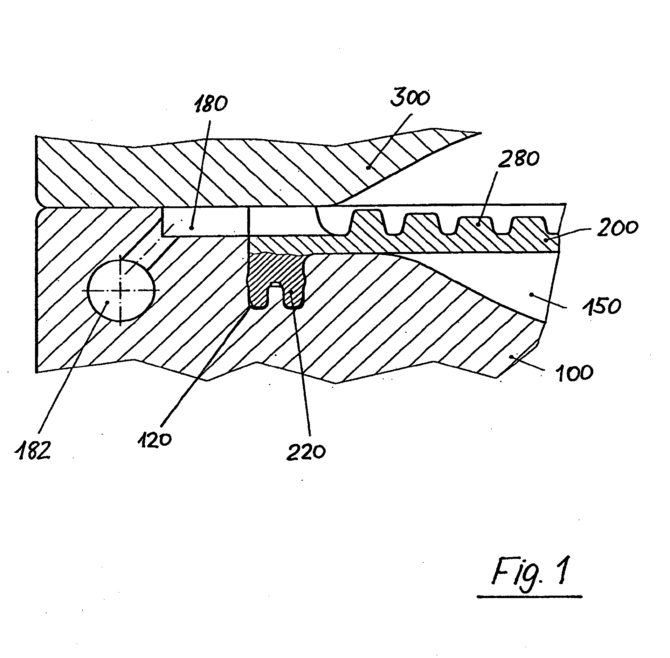

Fig. 1 zeigt eine Teil-Querschnittsansicht einiger Bauteile eines Filterpressensystems mit einer Ausführungsform eines Membranträgers 100 mit einer Membran 200 gemäß der Erfindung. Fig. 1 zeigt zusätzlich eine Kammerfilterplatte 300, die auf den Membranträger 100 und die darin eingesetzte Membran 200 aufgesetzt ist.

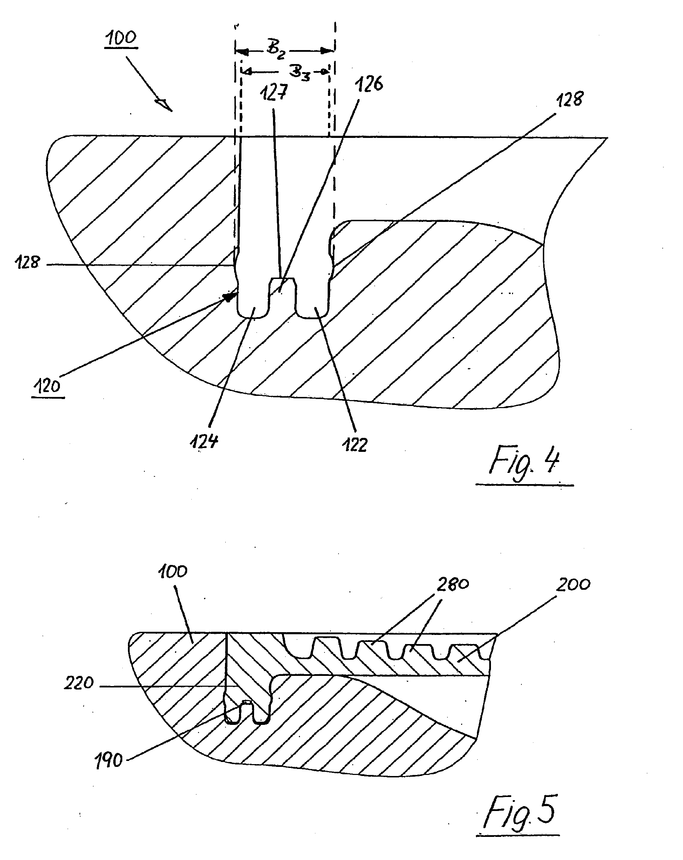

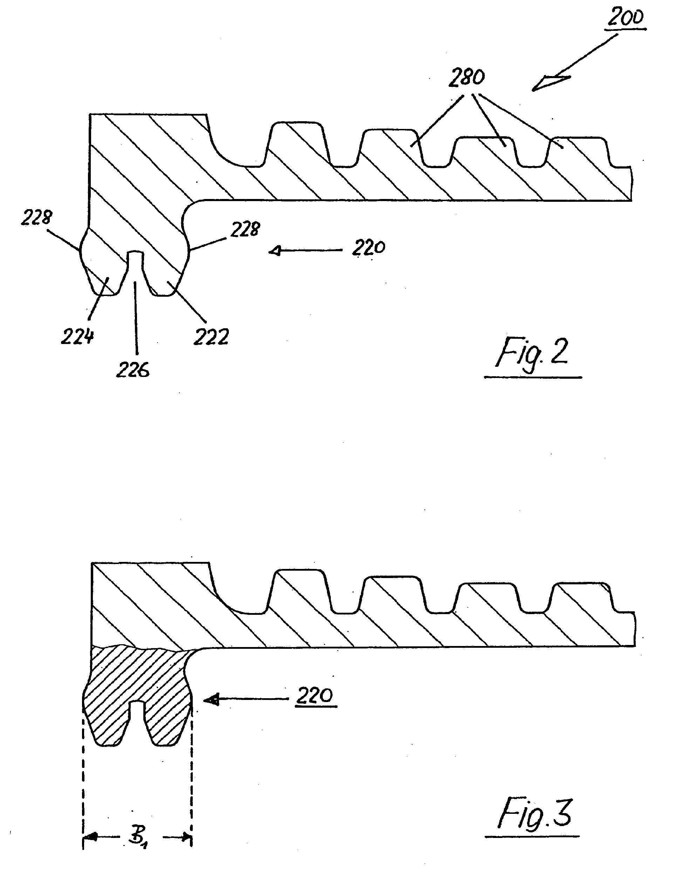

Die Membran 200 umfasst einen bei dieser Ausführungsform im Randbereich ausgebildeten Dichtungswulst 220, der in eine zugehörige Nut 120 des Membranträgers 100 eingesetzt ist. Im Hinblick auf die detaillierten Ausführungen des Dichtungswulstes 220 wird insbesondere auf die Beschreibung zu den Figuren 2 und 3 verwiesen, im Hinblick auf die detaillierten Ausführungen der Nut 120 wird insbesondere auf die Beschreibung zu Fig. 4 verwiesen.

Wie gut aus Fig. 1 ersichtlich ist, wird durch die mit Noppen 280 versehene Membran 200 einerseits und den Membranträger 100 andererseits ein Kammerbereich 150 geschaffen, der mittels eines fluiden Mediums mit Druck beaufschlagbar ist. Die Noppen 280 der Membran 200 haben unterschiedliche Höhen, wobei die Höhe der Noppen 280 im Randbereich höher ist als im inneren Bereich der Membran 200.

Durch den Membranträger 100 und die Kammerfilterplatte 300 werden Waschkanäle 180 gebildet, die über Kanäle 182 ebenfalls mit einem fluiden Medium versorgt und damit mit Druck beaufschlagt werden können.

Während des Einsatzes eines solchen Filterpressensystems werden unterschiedliche Betriebszustände durchlaufen, wobei entweder im Kammerbereich 150 ein höherer Druck vorherrscht, beispielsweise beim Nachpressen, während beispielsweise bei einem Waschvorgang die Waschkanäle 180 mit einem höheren Druck beaufschlagt werden, wobei das Dichtungssystem, das durch den in die Nut 120 eingesetzten Dichtungswulst 220 realisiert wird, in beide Richtungen abdichtet und eine Vermischung der beiden Druckmedien zuverlässig verhindert.

Die Figuren 2 und 3 zeigen zwei verschiedene Ausführungsformen einer Membran 200, wie sie in einem Filterplattensytem, wie es in Fig. 1 gezeigt ist, eingesetzt werden können, wobei die in den Figuren 2 und 3 gezeigte Membran geometrisch baugleich sind.

Jedoch ist die in Fig. 2 gezeigte Membran durchgehend aus einem Material hergestellt, während bei der in Fig. 3 gezeigten Ausführungsform der Dichtungswulst 220 aus einem anderen Material hergestellt ist als der verbleibende Bereich der Membran 200.

Die in Fig. 2 gezeigte Membran 200 besteht aus TPE mit gleichbleibender Härte (60 Shore A), während die in Fig. 3 gezeigte Membran 200, mit Ausnahme des Dichtungswulstes 220, aus einem TPE mit einer Härte 40 Shore D hergestellt ist. Der Dichtungswulst 220, der in Fig. 3 dargestellten Membran 200 besteht aus einem TPE mit einer Härte von 60 Shore A.

Wie in den Figuren 2 und 3 gezeigt, weist der Dichtungswulst 220 der Membran 200 zwei Stege 222, 224 auf, die von einem Zwischenraum 226 voneinander getrennt sind. Die Stege 222, 224 verlaufen im unteren Bereich, also in Richtung auf einen Nutboden eines zugehörigen Membranträgers, konisch zu, was ein Einsetzen der Membran 200 in einen zugehörigen Membranträger erleichtert, wobei ferner auch die Bewegung der Stege 222, 224 in Richtung auf einen Steg des Membranträgers (siehe Bezugszeichen 126 in Fig. 4), der dann von den beiden Stegen 222, 224 gleichsam umfasst wird, erleichtert wird, wodurch die bevorzugte doppelt dichtende Funktion erreicht wird.

Der Dichtungswulst 220 weist an jeder Außenseite der Stege, also den Seiten der Stege 222, 224, die von Zwischenraum 226 abgewendet sind, Auswölbungen 228 auf, die insbesondere eine sichere Befestigung der Membran 200 in den zugehörigen Membranträger 100 sicherstellt, siehe auch Fig. 5 und die zugehörige Erläuterung.

Fig. 4 zeigt eine Teil-Querschnittsansicht bei einer Ausführungsform eines erfindungsgemäßen Membranträgers 100, der eine umlaufende Nut 120 zur Aufnahme eines Dichtungswulstes einer Membran umfasst.

Die im Randbereich angeordnete umlaufende Nut 120 umfasst einen vom Nutboden ausgehenden Steg 126, der sich in die Nut hinein erstreckt, so dass zwei voneinander getrennte Bereiche (oder auch Teil-Nuten) 122 und 124 entstehen, in die entsprechende Stege 222, 224 eines Dichtungswulstes 220 und einer zugehörigen Membran 2, siehe Figuren 2 und 3, eingesetzt werden können, wobei Fig. 5 wie auch Fig. 1 einen Zustand zeigen, bei dem die Membran 200 in dem Membranträger 100 eingesetzt ist.

Der Steg 126 sitzt, in Querschnittsrichtung, in der Mitte der umlaufenden Nut 120 und ist lediglich in seinem oberen Bereich leicht konisch zulaufend, wobei er einen oberen Abschluss 127 umfasst, der im Wesentlichen geradlinig oder horizontal verläuft.

Die Bereiche 122 und 124 umfassen im Wesentlichen geradlinig oder senkrecht verlaufende Randbereiche, wobei die unteren Abschlüsse abgerundet ausgebildet sind.

Die Nut 120 umfasst ferner zwei Auswölbungen 128 zur Aufnahme zugehöriger Auswölbungen 228 der Membran 200 (siehe Figs. 2 und 3).

Die Breite B₃ ist etwas kleiner als die maximale Gesamtbreite B₁ des Dichtungswulstes 220 der Membran 200, siehe Fig. 3.

Der in Fig. 4 gezeigte Membranträger besteht bei dieser Ausführungsform aus Polypropylen PP.

Fig. 5 zeigt die in Fig. 2 dargestellte Ausführungsform der Membran 200, die in die in Fig. 4 dargestellte Ausführungsform des Membranträgers 100 eingesetzt ist. Zur Vermeidung von Wiederholungen wird zur Beschreibung auf die Figuren 2, 3 und 4 verwiesen.

In Fig. 5 sieht man deutlich einen Abstand oder einen Zwischenraum 190, der oberhalb des Abschlusses 127 des Steges 126 des Membranträgers 100 und dem Abschluss des Zwischenraumes 226 zwischen den beiden Stegen 222, 224 der Membran 200 entsteht.

Die in der Beschreibung, den Ansprüchen und den Zeichnungen offenbarten Merkmale der Erfindung können sowohl einzeln als auch in beliebiger Kombination für die Verwirklichung der Erfindung wesentlich sein.

## Patentansprüche

1. Membranträger (100) mit Membran (200) für eine Filterpresse, die so ausgebildet sind, dass die Membran (200) lösbar mit dem Membranträger (100) verbunden werden kann, wobei die Membran (200) mindestens einen Dichtungswulst (220) umfasst, der in eine zugehörige Nut (120) des Membranträgers (100) eingesetzt werden kann, wobei sich der Dichtungswulst (220) und die zugehörige Nut (120) über eine Längsausdehnung erstrecken und einen über die Längsstreckung im Wesentlichen unveränderten Querschnitt aufweisen
wobei der Dichtungswulst (220) der Membran (200) in Querschnittsrichtung zwei Stege (222, 224) aufweist, die durch einen Zwischenraum (226) voneinander getrennt sind,
**dadurch gekennzeichnet, dass**
die Nut (120) des Membranträgers (100) in Querschnittrichtung einen Steg (126) aufweist, der sich vom Nutboden der Nut (120) des Membranträgers (100) aus so erstreckt, dass er sich bei einer mit dem Membranträger (100) verbundenen Membran (200) zumindest teilweise in den Zwischenraum (226) zwischen den beiden Stegen (222, 224) des Dichtungswulstes (220) der Membran (200) erstreckt,
wobei die Stege (222, 224) des Dichtungswulstes (220) dazu eingerichtet sind, im Gebrauch der Filterpresse beim Nachpressen oder beim Waschvorgang so auf den Steg (126) des Membranträgers gedrückt zu werden, dass jeweils eine abschließende und vollständige Dichtung zwischen einer Außenseite des Steges (126) des Membranträgers und einer Innenseite des jeweiligen Steges (222, 224) des Dichtungswulstes entsteht.

2. Membranträger mit Membran nach Anspruch 1, **dadurch gekennzeichnet, dass** die Stege (222, 224) des Dichtungswulstes (220) der Membran (200) zumindest teilweise konisch zulaufen.

3. Membranträger mit Membran nach Anspruch 1 oder 2, **dadurch gekennzeichnet, dass** die Dichtungswulst (220) der Membran (200) in unbelastetem Zustand eine maximale Breite B₁ aufweist, die größer ist als eine maximale Breite der Nut (120) des Membranträgers (100).

4. Membranträger mit Membran nach einem der vorhergehenden Ansprüche, **dadurch gekennzeichnet, dass** der Steg (126) in der Nut (120) des Membranträgers (100) einen im Wesentlichen rechteckigen Querschnitt aufweist.

5. Membranträger mit Membran nach Anspruch 4, **dadurch gekennzeichnet, dass** der Steg (126) des Membranträgers (100) in seinem vom Nutboden abgewandten Bereich konisch zulaufend ausgebildet ist.

6. Membranträger mit Membran nach einem der vorhergehenden Ansprüche, **dadurch gekennzeichnet, dass** die Länge des Steges (126) des Membranträgers (100) kürzer ist als die Länge des Zwischenraums zwischen den beiden Stegen (222, 224) des Dichtungswulstes (220) der Membran (200).

7. Membranträger mit Membran nach einem der vorhergehenden Ansprüche, **dadurch gekennzeichnet, dass** der Membranträger (100) und die Membran (200) so ausgebildet sind, dass in einem Zustand, bei dem die Membran (200) mit dem Membranträger (100) verbunden ist, ein Abstand zwischen dem dem Nutboden abgewandten Ende (127) des Steges (126) des Membranträgers (100) und dem Abschluss des Zwischenraumes (226) zwischen den beiden Stegen (222, 224) des Dichtungswulstes (220) der Membran (200) verbleibt.

8. Membranträger mit Membran nach einem der vorhergehenden Ansprüche, **dadurch gekennzeichnet, dass** die Stege (222, 224) des Dichtungswulstes (220) und/oder andere Bereiche des Dichtungswulstes (220) an mindestens einer, dem Zwischenraum (226) abgewandten Seite eine Auswölbung (228) aufweisen.

## Claims

1. A membrane carrier (100) including a membrane (200) for a filter press, which are formed such that the membrane (200) can be detachably connected to the membrane carrier (100), wherein the membrane (200) includes at least one sealing bead (220) which can be inserted into a corresponding groove (120) of the membrane carrier (100),
wherein the sealing bead (220) and the corresponding groove (120) extend over a longitudinal extension and have a substantially unchanged cross section over the longitudinal extension, wherein the sealing bead (220) of the membrane (200) includes in the cross section direction two webs (222, 224), which are separated from each other by a space (226)
**characterized in that**
the groove (120) of the membrane carrier (100) includes in the cross section direction a web (126), which extends from the groove bottom of the groove (120) of the membrane carrier (100) in such a way that it extends at least partially into the space (226) between the both webs (222, 224) of the sealing bead (220) of the membrane (200) when the membrane (200) is connected to the membrane carrier (100),
wherein the webs (222, 224) of the sealing bead (220) are configured such that, in use of the filter press during the re-pressing or during the washing process, the web (126) of the membrane carrier is pressed such that a final and complete sealing is formed between the outer surface of the web (126) of the membrane carrier and the inner surface of corresponding web (222, 224) of the sealing bead (220).

2. The membrane carrier including a membrane according to claim 1, wherein the webs (222, 224) of the sealing bead (220) of the membrane (200) are at least partially tapered.

3. The membrane carrier including a membrane according to claim 1 or 2, wherein the sealing bead (220) of the membrane (200) has in the no-load condition a maximum width B₁ which is larger than a maximum width of the groove (120) of the membrane carrier (100).

4. The membrane carrier including a membrane according to any one of the preceding claims, wherein the web (126) in the groove (120) of the membrane carrier (100) has a substantially rectangular cross section.

5. The membrane carrier including a membrane according to claim 4, wherein the web (126) of the membrane carrier (100) has a tapered configuration in its region opposite the groove bottom.

6. The membrane carrier including a membrane according to any one of the preceding claims, wherein the length of the web (126) of the membrane carrier (100) is shorter than the length of the space between the both webs (222, 224) of the sealing bead (220) of the membrane (200).

7. The membrane carrier including a membrane according to any one of the preceding claims, wherein the membrane carrier (100) and the membrane (200) are configured such that, in a condition in which the membrane (200) is connected to the membrane carrier (100), a distance remains between the end (127) of the web (126) of the membrane carrier (100), which is opposite the groove bottom, and the end of the space (226) between the two webs (222, 224) of the sealing bead (220) of the membrane (200).

8. The membrane carrier including a membrane according to any one of the preceding claims, wherein the webs (222, 224) of the sealing bead (220) and/or other regions of the sealing bead (220) comprise a curved protrusion (228) on at least one side opposite the space (226).

## Revendications

1. Porte-membrane (100) ayant une membrane (200) pour un filtre-presse, qui sont conçus de telle sorte que la membrane (200) peut être reliée de façon détachable avec le porte-membrane (100), étant entendu que la membrane (200) comprend au moins un bourrelet d'étanchéité (220) qui peut être inséré dans une rainure correspondante (120) du porte-membrane (100), étant entendu que le bourrelet d'étanchéité (220) et la rainure correspondante (120) s'étendent dans un sens longitudinal et présentent une section pour l'essentiel inchangée sur toute l'extension longitudinale,
étant entendu que le bourrelet d'étanchéité (220) de la membrane (200) présente, dans le sens de la section, deux ailettes (222, 224) qui sont séparées l'une de l'autre par un espace intermédiaire (226),
**caractérisé en ce que**
la rainure (120) du porte-membrane (100) présente, dans le sens de la section, une ailette (126) qui s'étend depuis le fond de la rainure (120) du porte-membrane (100) de telle sorte que lorsqu'une membrane (200) est reliée avec le porte-membrane (100), elle s'étend au moins partiellement dans l'espace intermédiaire (226) entre les deux ailettes (222, 224) du bourrelet d'étanchéité (220) de la membrane (200),
étant entendu que les ailettes (222, 224) du bourrelet d'étanchéité (220) sont prévues pour être comprimées sur l'ailette (126) du porte-membrane, lors de l'utilisation du filtre-presse dans le cadre d'un repressage ou d'un processus de lavage, de telle sorte qu'une étanchéité finale et totale est réalisée entre un côté extérieur de l'ailette (126) du porte-membrane et un côté intérieur de l'ailette respective (222, 224) du bourrelet d'étanchéité.

2. Porte-membrane ayant une membrane selon la revendication 1, **caractérisé en ce que** les ailettes (222, 224) du bourrelet d'étanchéité (220) de la membrane (200) convergent au moins partiellement dans une forme conique.

3. Porte-membrane ayant une membrane selon la revendication 1 ou 2, **caractérisé en ce que** le bourrelet d'étanchéité (220) de la membrane (200) présente, à l'état non sollicité, une largeur maximale B₁ qui est supérieure à une largeur maximale de la rainure (120) du porte-membrane (100).

4. Porte-membrane ayant une membrane selon l'une des revendications précédentes, **caractérisé en ce que** l'ailette (126) présente, dans la rainure (120) du porte-membrane (100), une section sensiblement rectangulaire.

5. Porte-membrane ayant une membrane selon la revendication 4, **caractérisé en ce que** l'ailette (126) du porte-membrane (100) est réalisée dans une forme s'effilant de façon conique dans sa zone en opposition au fond de la rainure.

6. Porte-membrane ayant une membrane selon l'une des revendications précédentes, **caractérisé en ce que** la longueur de l'ailette (126) du porte-membrane (100) est plus petite que la longueur de l'espace intermédiaire entre les deux ailettes (222, 224) du bourrelet d'étanchéité (220) de la membrane (200).

7. Porte-membrane ayant une membrane selon l'une des revendications précédentes, **caractérisé en ce que** le porte-membrane (100) et la membrane (200) sont réalisés de telle sorte que dans un état dans lequel la membrane (200) est reliée avec le porte-membrane (100), il subsiste un écartement entre l'extrémité (127) de l'ailette (126) du porte-membrane (100) qui est opposée au fond de la rainure et la terminaison de l'espace intermédiaire (226) entre les deux ailettes (222, 224) du bourrelet d'étanchéité (220) de la membrane (200).

8. Porte-membrane ayant une membrane selon l'une des revendications précédentes, **caractérisé en ce que** les ailettes (222, 224) du bourrelet d'étanchéité (220) et/ou d'autres zones du bourrelet d'étanchéité (220) présentent un bombement (228) sur au moins un côté opposé à l'espace intermédiaire (226).
